# EUROPEAN PATENT SPECIFICATION

(11) **EP 3 010 024 B1**
(45) Date of publication and mention of the grant of the patent: **08.11.2017**
(21) Application number: 13886864.1
(22) Date of filing: 12.06.2013
(51) Int. Cl.: G21C 3/06, C04B 35/80, C04B 41/89, G21C 3/326

(54) **TUBULAR BODY AND METHOD FOR MANUFACTURING TUBULAR BODY**
ROHRKÖRPER UND VERFAHREN ZUR HERSTELLUNG DES ROHRKÖRPERS
CORPS TUBULAIRE ET PROCÉDÉ DE FABRICATION DE CORPS TUBULAIRE

(43) Date of publication of application: 20.04.2016
(73) Proprietor: Hitachi, Ltd., Chiyoda-ku Tokyo 100-8280 (JP)
(72) Inventor: ISHIBASHI, Ryou, Hitachi-shi, Ibaraki 319-1292 (JP); HINO, Tetsushi, Hitachi-shi, Ibaraki 319-1292 (JP); KITO, Kazuaki, Hitachi-shi, Ibaraki 319-1292 (JP); KAMOSHIDA, Mamoru, Hitachi-shi, Ibaraki 319-1292 (JP); CHAKI, Masao, Hitachi-shi, Ibaraki 319-1292 (JP); AOYAMA, Motoo, Hitachi-shi, Ibaraki 319-1292 (JP); NAKANO, Hiroshi, Hitachi-shi, Ibaraki 319-1292 (JP); TAKAHASHI, Katsuhito, Hitachi-shi, Ibaraki 319-1292 (JP); HASHIMOTO, Tsuneyuki, Hitachi-shi, Ibaraki 319-1292 (JP); KAWAMURA, Toshinori, Hitachi-shi, Ibaraki 319-1292 (JP); SEKIHARA, Masaru, Hitachi-shi, Ibaraki 319-1292 (JP); NAKANE, Motoki, Hitachi-shi, Ibaraki 319-1292 (JP)
(74) Representative: MERH-IP Matias Erny Reichl Hoffmann Patentanwälte PartG mbB
(86) International application number: PCT/JP2013/066179
(87) International publication number: WO 2014/199459

(56) References cited:
- JP-A- H08 260 081
- JP-A- 2001 066 390
- JP-A- 2006 028 015
- JP-A- 2006 151 720
- JP-A- 2008 501 977
- JP-A- 2009 210 266

## Description

### Technical Field

The present invention relates to a tubular body and a manufacturing method for the same.

### Background Art

As an apparatus used to store a nuclear fuel in a reactor, PTL 1 discloses a three-layer structure fuel cladding tube having a high purity SiC layer manufactured by using a chemical vapor deposition (CVD) method as an inner layer, manufacturing a SiC/SiC composite material by using a chemical vapor infiltration (CVI) method by winding SiC fiber on the inner layer, and manufacturing a fine particle SiC layer by using the CVI method as the outer layer.

### Citation List

### Patent Literature

PTL 1: JP 2008-501977 W

### Summary of Invention

### Technical Problem

In a reactor such as a light-water reactor for using water as a coolant, a case where cooling water cannot flow into the reactor due to stop of a circulation apparatus, a large amount of water leakage from a circulation piping, and the like, that is, a case where a cooling water loss accident occurs, the temperature in the reactor is increased by heat generated by uranium fuel, and high temperature steam is generated.

Here, a zirconium alloy used for an existing fuel cladding tube has a small thermal neutron absorption cross section and an excellent corrosion resistance. Therefore, the zirconium alloy shows excellent fuel properties at the time of a normal operation. However, when being exposed to high temperature steam of which the temperature exceeds 1000°C, the zirconium alloy remarkably gets oxidized and generates a large amount of hydrogen. The large amount of generated hydrogen flows out from the reactor, and there is a case where a hydrogen explosion is generated and causes an expansion of the accident.

In order to prevent this situation, a design for reinforcing safety, such as multiple power supplies including an emergency power supply and an emergency core cooling system and a cooling apparatus, is provided in the reactor, and the reactor is further improved and repaired. This certainly reduces occurrence probability of accidents. It is desired that the attempt to reinforce the safety be performed to not only the system design but also the material of the core.

As part of it, it has been considered that ceramics is used as the material of the fuel cladding tube instead of the zirconium alloy which causes the generation of a large amount of hydrogen. Among the ceramics, SiC has an excellent corrosion resistance, high thermal conduction, and a small thermal neutron absorption cross section. Therefore, the SiC is a promising cladding tube material, and research on the SiC has been developed. Among the SiC, a SiC fiber reinforced SiC matrix composite material (referred to as SiC/SiC composite material below) having higher toughness than monolithic SiC is selected as the base material, and a new cladding tube is disclosed.

Here, in a high temperature steam environment in which the temperature exceeds 1300°C, even when stainless steel is used, an oxidation rate gets close to that of the zirconium alloy. An effect of the reduction in the generation of hydrogen caused by switching the material to a metal material cannot be much expected.

On the other hand, an oxidation rate of the SiC is lower than that of the zirconium alloy by two orders, and the significant reduction in the generation of hydrogen can be expected. However, the SiC is not unoxidized at all, and the SiC is oxidized in the high temperature steam environment and generates SiO₂ and forms a protective film, and SiCO2 generates volatile Si (OH)₄ by reacting with water. Therefore, especially when a gas flow rate is high, the reduction in the SiC and the generation of the hydrogen increase. Accordingly, when the SiC tube reinforced by the SiC fiber is used as the base material, it is necessary to take measures to prevent the generation of Si(OH)₄.

Also, although it depends of a manufacturing method, the SiC tube reinforced by the SiC fiber generally has less airtightness than the monolithic SiC. Therefore, when the SiC tube is used as the fuel cladding tube, it is necessary to take measures to improve the airtightness so as to contain the radioactive nuclide in the SiC tube.

When a SiC layer is provided as an inner layer or an outer layer, the airtightness can be improved. However, since the monolithic SiC is used in the SiC layer, fracture toughness is low. Therefore, when a crack occurs once, the crack is easily developed, and there is a possibility that the airtightness cannot be maintained. Accordingly, it is necessary that the SiC layer is made to be thick in order to improve the strength. On the other hand, a baking temperature (1800 to 2000°C) of the CVI method and a nano-infiltration transient eutectic phase (NITE) method in which the SiC/SiC composite material with high mechanical strength can be manufactured is a temperature equal to or higher than melting points of metal and alloy other than some metals having high melting point. Therefore, when the SiC/SiC composite material is compounded with metal layer, a method with a low baking temperature such as a polymer infiltration and pyrolysis (PIP) method is employed to form the SiC/SiC composite material relative to and after the metal layer. The strength of the SiC/SiC composite material cannot be expected.

On the other hand, when the SiC/SiC composite material tube and the metal tube are separately formed and a multiple tube is formed by shrink fitting, there is a possibility that the base material is broken by a generated stress because the thickness of the cladding tube is about one mm. Also, when gaps are generated in some places on a border between the tubes, unevenness in a thermal conduction is generated at the time of operation. Therefore, this is not an appropriate method.

A purpose of the present invention is to provide a tubular body which is arranged around a fuel placed in a core part in a reactor for using water as a coolant and can prevent generation of hydrogen due to a reaction with water in case of an accident and has high reliability relative to radioactive nuclide containment and a manufacturing method for the tubular body. Solution to Problem

In order to solve the above problems, for example, a structure described in claims is employed.

The present invention includes a plurality of solutions relative to the problem. An exemplary solution is to include a base material formed of a SiC tube reinforced by SiC fiber, a metal layer formed on a side of an inner surface of the base material, and a rare earth silicate layer formed on a side of an outer surface of the base material.

### Advantageous Effects of Invention

According to the present invention, a tubular body having a structure for preventing generation of hydrogen due to a reaction with water in case of an accident and having high reliability relative to radioactive nuclide containment and a manufacturing method for the tubular body are provided.

### Brief Description of Drawings

[FIG. 1] FIG. 1 is a sectional perspective diagram of a fuel cladding tube that is a first embodiment of a tubular body according to the present invention.
[FIG. 2] FIG. 2 is a diagram of a test result of a containment confirming test according to a helium gas permeability test of the fuel cladding tube that is the first embodiment of the tubular body according the present invention.
[FIG. 3] FIG. 3 is a schematic diagram of a structure of an outer layer of the fuel cladding tube that is the first embodiment of the tubular body according to the present invention.
[FIG. 4] FIG. 4 is a schematic diagram of a structure of an outer layer of a fuel cladding tube that is a fourth embodiment of the tubular body according to the present invention.
[FIG. 5] FIG. 5 is a diagram of a 1400°C steam oxidation test result to compare hydrogen generation amounts in the fuel cladding tube that is the fourth embodiment according to the present invention.
[FIG. 6] FIG. 6 is a schematic diagram of a structure of an outer layer of a fuel cladding tube that is a fifth embodiment of the tubular body according to the present invention.
[FIG. 7] FIG. 7 is a schematic diagram of a structure of an outer layer of a fuel cladding tube that is a sixth embodiment of the tubular body according to the present invention.
[FIG. 8] FIG. 8 is a sectional perspective diagram of a fuel rod of a seventh embodiment of the tubular body according to the present invention.
[FIG. 9] FIG. 9 is a sectional perspective diagram of a water rod of a seventh embodiment of the tubular body according to the present invention.
[FIG. 10] FIG. 10 is a sectional perspective diagram of another aspect of the water rod of the seventh embodiment of the tubular body according to the present invention.
[FIG. 11] FIG. 11 is a sectional schematic diagram of a fuel assembly for using the fuel rod and the water rod according to the seventh embodiment of the present invention.
[FIG. 12] FIG. 12 is a perspective diagram of a fuel assembly for using a fuel rod and a water rod according to an eighth embodiment of the present invention.
[FIG. 13] FIG. 13 is a cross sectional diagram of the fuel assembly for using the fuel rod and the water rod according to the eighth embodiment of the present invention.
[FIG. 14] FIG. 14 is a partial sectional schematic diagram of the fuel rod according to the eighth embodiment of the present invention.

### Description of Embodiments

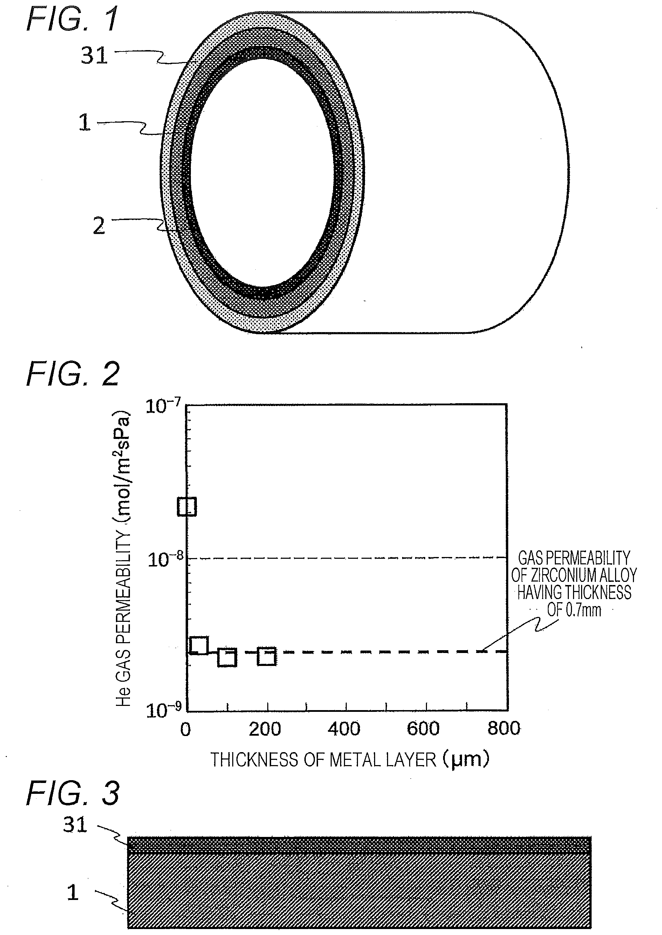

Embodiments of a tubular body and a manufacturing method for the same according to the present invention will be described with reference to FIGS. 1 to 14.

For example, the tubular body according to the present invention is mainly used for a fuel cladding tube which protects a fuel placed in a core part in a reactor in which water is used as a coolant.

In the tubular body according to the present invention, a SiC tube which is reinforced by SiC fiber is used as a base material. A metal layer is formed on a side of an inner surface of the base material, and a rare earth silicate layer is formed on a side of an outer surface of the base material.

The base material of the tubular body is formed of the cylindrical SiC tube having a speed to generate hydrogen by reacting with high temperature steam remarkably slower than the conventional zirconium alloy.

The SiC tube is reinforced by the SiC fiber and has higher fracture toughness that that of monolithic SiC. Therefore, the SiC tube has high reliability as a structure member.

It is preferable that the SiS tube be reinforced by the SiC fiber and a main part including a matrix be formed of the SiC. For example, the SiC tube manufactured by using a CVI method and a NITE method can be used.

The metal layer which forms a layer on the side of the inner surface of the tubular body may be formed of any one of the following metals, Cu, Fe, Ni, Cr, Mo, Zr, and Ti or an alloy of these metals.

The SiC tube, which is reinforced by the SiC fiber, for forming the base material has lower airtightness than the monolithic SiC. The SiC tube does not have enough containment relative to the radioactive nuclide required to the fuel rod. In addition, since the SiC tube still has lower fracture toughness than metal, a crack is easily generated. Therefore, the airtightness is supplemented by providing a ductile metal layer on the side of the inner surface of the SiC tube reinforced by the SiC fiber. In case where the crack is generated, the airtightness is secured by the metal layer, and a pellet interaction and a severe reaction with the SiC are avoided.

The metal layer may be formed by performing a film forming process for using any one of the following metals: Cu, Fe, Ni, Cr, Mo, Zr, and Ti or the alloy of these metals relative to the base material by using a film forming process. The film forming process may include sputtering, evaporation, electroplating, electroless plating, or metal paste coating and baking. Alternatively, a metal tube formed of any one of the following metals Cu, Fe, Ni, Cr, Mo, Zr, and Ti or the alloy of these metals may be inserted in the SiC tube, and a pressure in the metal tube is increased, and the metal tube is extended. Then, the metal tube adheres on the inner surface of the SiC tube. Accordingly, the metal layer is formed.

The metal layer formed by using these methods has advantages such that the metal layer has high adhesion to the base material and it is difficult to generate unevenness in a thermal conduction. Also, since the metal layer can be formed after the base material has been manufactured, the SiC tube reinforced by the SiC fiber manufactured by using the CVI method and the NITE method can be used as the base material, and a strength of the base material can be increased.

The rare earth silicate layer forming a layer on the side of the outer surface of the tubular body may be formed by using any one of Y₂SiO₅, Y₂Si₂O₇, Yb₂SiO₅, Yb₂Si2O₇, and Lu₂Si₂O₇ as a main component.

The rare earth silicate layer is formed on the side of the outer surface of the base material independently or via a middle layer.

In the SiC tube reinforced by the SiC fiber, a carbon film is formed around the SiC fiber. When the SiC tube is exposed to a corrosive environment, the carbon film and a peripheral area are corroded with priority. Therefore, the SiC tube has a lower corrosion resistance than the monolithic SiC. In addition, when the SiC itself is exposed to a high temperature steam environment, volatile Si(OH)₄ is generated, and the thickness is reduced by oxidation.

To prevent this, the rare earth silicate layer is formed on the side of the outer surface of the SiC tube. By forming the rare earth silicate layer by using any one of Y₂SiO₅, Y₂Si₂O₇, Yb₂SiO₅, Yb₂Si2O₇, and Lu₂Si₂O₇, which have a small difference of thermal expansion from that of the SiC, as a main component, separation caused by a heat strain can be prevented. Also, since the rare earth silicate layer is formed by an element having a small thermal neutron absorption cross section, the rare earth silicate layer is suitable for the fuel cladding tube.

In the tubular body according to the present invention, it is preferable that the middle layer be formed between the rare earth silicate layer and the SiC tube that is the base material. It is preferable that the middle layer be a high purity SiC layer is formed by using an evaporation method.

By forming the middle layer, especially, by forming the high purity SiC layer by using the evaporation method, a reaction between the SiC tube and the rare earth silicate layer can be reduced, and adhesion between the SiC tube and the rare earth silicate layer can be improved.

Also, in the tubular body according to the present invention, it is preferable to provide a protection layer outside the rare earth silicate layer configuring the outer surface layer.

It is more preferable that the protection layer be the high purity SiC layer formed by using the evaporation method.

A purpose of the protection layer is to protect the rare earth silicate layer at the time of a normal operation.

According to the present invention, since the metal layer that is an inner layer has higher fracture toughness than the SiC, the internal radioactive nuclide can be contained with the inner layer thinner than a SiC film. Also, the metal layer has high adhesion and small unevenness in the thermal conduction. Also, the external rare earth silicate layer can largely reduce an amount of hydrogen generated by a reaction between the SiC of the base material and the high temperature steam in case of an accident.

Therefore, for example, the tubular body according to the present invention is applied to the nuclear fuel rod and the water rod having the same structure as that of the fuel cladding tube, and the fuel assembly is formed by using the nuclear fuel rod and the water rod. According to this, the radioactive nuclide in the fuel rod can be contained. Also, in case of an accident, a large reduction in the amount of hydrogen generated by the reaction between the SiC of the base material and the high temperature steam is achieved.

Therefore, the generation of hydrogen due to the reaction with the water can be prevented in case of an accident, and the tubular body according to the present invention can be used for the fuel cladding tube and the water rod having a structure with high reliability relative to radioactive nuclide containment at the time of the normal operation and at the time of the transfer.

Next, a manufacturing method for the tubular body according to the present embodiment will be described below.

First, the base material formed of the SiC tube reinforced by the SiC fiber is manufactured. The manufacturing method for the base material formed by the SiC tube reinforced by the SiC fiber may be a known method.

Subsequently, it is preferable to form a middle layer formed of β-SiC on the side of the outer surface of the base material formed of the SiC tube reinforced by the SiC fiber.

By forming the middle layer, the airtightness of the rare earth silicate layer which is formed on the side of the outer surface of the base material after that can be improved. Also, adhesion between the base material and the rare earth silicate layer can be improved.

Subsequently, the rare earth silicate layer is formed on the side of the outer surface of the base material formed of the SiC tube reinforced by the SiC fiber or the base material in which the middle layer formed of β-SiC is formed.

For example, the rare earth silicate layer is directly formed by sintering or spraying after the material such as Y₂SiO₅, Y₂Si₂O₇, Yb₂SiO₅, Yb₂Si2O₇, and Lu₂Si₂O₇ has been dispersed on the surface by coating it and the like.

Subsequently, the metal layer is formed on the side of the inner surface of the base material in which the rare earth silicate layer is formed.

In a metal layer forming process, the metal layer is formed by performing a film forming process for using any one of the following metals, Cu, Fe, Ni, Cr, Mo, Zr, and Ti or the alloy of these metals relative to the base material by using a film forming process. The film forming process may include sputtering, evaporation, electroplating, electroless plating, or metal paste coating and baking.

Alternatively, a metal tube formed of any one of the following metals Cu, Fe, Ni, Cr, Mo, Zr, and Ti or the alloy of these metals is inserted in the SiC tube, and a pressure in the metal tube is increased, and the metal tube which has been previously inserted is extended. Then, the metal tube adheres on the inner surface of the SiC tube. Accordingly, the metal layer is formed.

Subsequently, it is preferable to form a protection layer formed of high purity SiC on the side of the outer surface of the rare earth silicate layer which has been previously formed. Regarding the protection layer, it is desired to form the high purity SiC layer by using the evaporation method.

According to the manufacturing method for the tubular body according to the present invention, the tubular body that has the metal layer having higher fracture toughness than the SiC as the inner layer and the rare earth silicate layer as the outer layer can be manufactured. Therefore, the tubular body suitable for the nuclear fuel rod and the water rod having the same structure as that of the fuel cladding tube can be obtained which can contain the radioactive nuclide in the fuel rod and can largely reduce the hydrogen amount generated by the reaction between the SiC of the base material and the high temperature steam in case of an accident.

Examples of the present invention and effects of the same will be described below with reference to first to eighth embodiments.

### (First Embodiment)

FIG. 1 is a sectional perspective diagram of a fuel cladding tube according to the present invention.

As illustrated in FIG. 1, in a fuel cladding tube 10, a SiC tube reinforced by a SiC fiber is used as a base material 1. A metal layer 2 is formed on a side of an inner surface of the base material 1. Also, a rare earth silicate layer 31 is formed on a side of an outer surface of the base material 1.

A length of the fuel cladding tube 10 is about four m, and a diameter of the fuel cladding tube 10 is about 10 mm. A thickness of the tube is about one mm.

A SiC/SiC composite material is used as the SiC tube (base material 1) reinforced by the SiC fiber. The metal layer 2 includes Cu formed into a film by plating.

FIG. 2 is a result of a containment confirming test according to a helium gas permeability test when the SiC/SiC composite material is used as the base material 1 and the metal layer 2 is applied by Cu plating.

As illustrated in FIG. 2, it has been found that a gas permeability can be reduced to a value which is approximately same as that of a conventional zirconium alloy tube (thickness, 0.7 mm) when the metal layer 2 has a film thickness equal to or wider than 30 µm.

FIG. 3 is a schematic diagram of an outer layer structure of the fuel cladding tube according to the present embodiment. As illustrated in FIG. 3, in the tubular body according to the present embodiment, a rare earth silicate layer 31 is directly formed on the side of the outer surface of the SiC tube (base material 1) reinforced by the SiC fiber.

The rare earth silicate layer is formed by using Y₂SiO₅ as a main component. The rare earth silicate layer is formed by uniformly coating Y₂SiO₅ powder on the surface of the base material 1 and baking it at 1400 to 1500°C.

### (Second Embodiment)

A metal layer 2 may be formed of metal such as Fe, Ni, Cr, Mo, Zr, and Ti or an alloy of them instead of Cu.

The metal layer 2 can be formed by any one of film forming processes without limiting to plating. The film forming processes include sputtering, evaporation, and metal paste coating and baking.

Also, the metal layer 2 can be formed by using a process in which a metal tube may be formed of the following metals Cu, Fe, Ni, Cr, Mo, Zr, and Ti or the alloy of these metals is inserted into a side of an inner surface of a SiC tube, and the metal or alloy tube is extended by increasing a pressure in the metal tube, and then the metal tube adheres on the inner surface of the SiC tube.

### (Third Embodiment)

The rare earth silicate layer 31 can be formed of any one of Y₂Si₂O₇, Yb₂SiO₅, Yb₂Si2O₇, and Lu₂Si₂O₇ without being limited to Y₂SiO₅.

The rare earth silicate layer 31 can be formed by uniformly coating the surface of a base material 1 with powder and baking it at 1400 to 1500°C. The powder is formed of any of one of Y₂Si₂O₇, Yb₂SiO₅, Yb₂Si2O₇, and Lu₂Si₂O₇.

### (Fourth Embodiment)

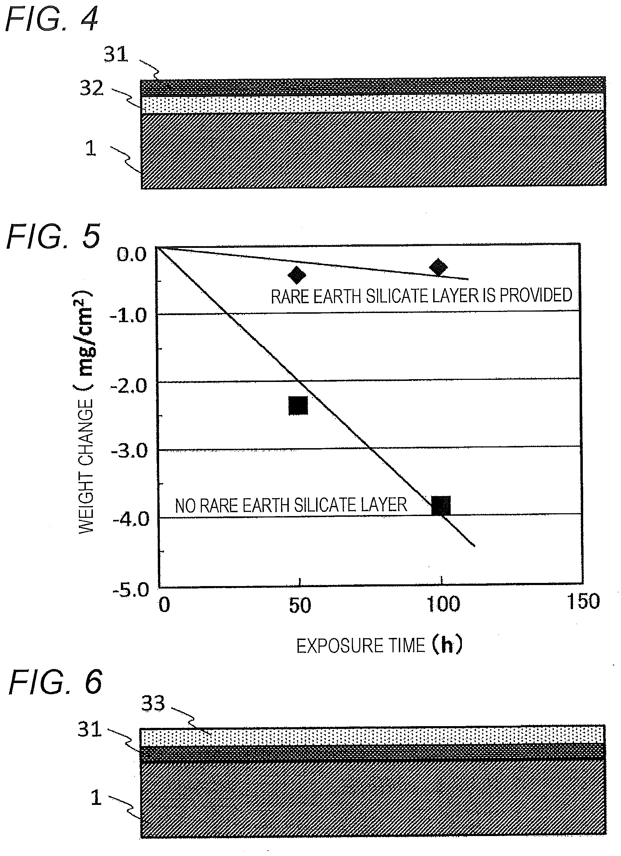

FIG. 4 is a schematic diagram of an outer surface structure of a fuel cladding tube according to the present embodiment in which a middle layer 32 is provided between a rare earth silicate layer 31 and a base material 1 formed of a SiC tube.

The middle layer 32 is a high purity SiC layer and formed by using an evaporation method.

By providing the middle layer 32, a reaction between the rare earth silicate layer 31 and components of the base material 1 at the time of baking the rare earth silicate layer 31 can be strongly prevented, and adhesion between the rare earth silicate layer 31 and the base material can be improved.

In FIG. 5, a result of a hydrogen generation amount comparison test of a fuel cladding tube according to the present embodiment is illustrated.

As illustrated in FIG. 5, it has been found that a weight reduction rate due to oxidation in a steam environment at 1400°C of the SiC tube having the rare earth silicate layer 31 provided therein can be reduced to one-ninth of that of the SiC tube with no rare earth silicate layer 31.

### (Fifth Embodiment)

FIG. 6 is a schematic diagram of an outer layer structure of a fuel cladding tube according to the present embodiment in which a protection layer 33 is provided outside a rare earth silicate layer 31.

The protection layer 33 is a high purity SiC layer and formed by using an evaporation method.

By providing the protection layer 33, for example, a resistance relative to corrosion at the time of normal reactor operation in high temperature pure water at about 300°C and a resistance relative to a breakage at the time of manufacture and transfer can be further improved.

### (Sixth Embodiment)

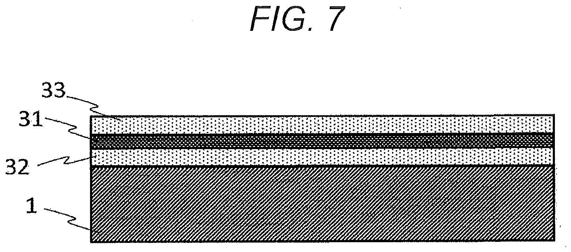

FIG. 7 is a schematic diagram of an outer layer structure of a fuel cladding tube according to the present embodiment in which both a middle layer 32 and a protection layer 33 are provided.

The middle layer 32 is formed on a side of an outer surface of a base material 1 formed of a SiC tube, and a rare earth silicate layer 31 is formed on a side of an outer surface of the middle layer 32. In addition, the protection layer 33 is formed on a side of an outer surface of the rare earth silicate layer 31.

The middle layer 32 and the protection layer 33 are high purity SiC layers and are formed by using an evaporation method.

By providing both the middle layer 32 and the protection layer 33, both effects obtained by the fourth and fifth embodiments can be obtained.

### (Seventh Embodiment)

A tubular body according to the present invention is suitable for a nuclear fuel rod in a fuel assembly and a water rod for using a tubular body which has the same structure as a cladding tube of a fuel rod.

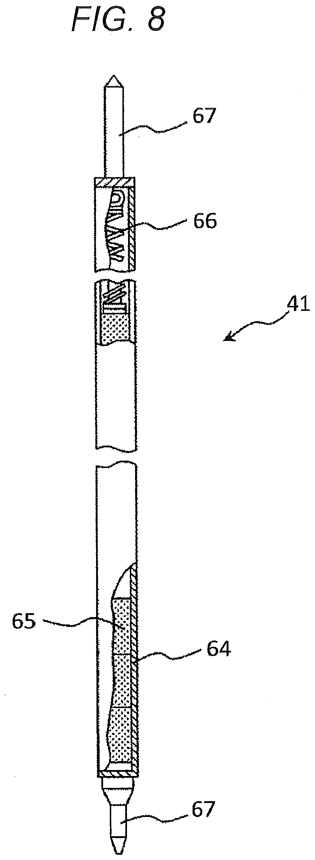

Exemplary structures of the fuel rod, the water rod, and the fuel assembly will be described below with reference to FIGS. 8 to 11.

FIG. 8 is a partial sectional diagram of a fuel rod for a boiling water reactor produced by applying the present invention.

In FIG. 8, a nuclear fuel rod 41 is formed of a cladding tube 64 including nuclear fuel pellets 65. A plenum spring 66 is provided in the upper part of the cladding tube 64. Both ends of the cladding tube 64 are sealed with end plugs 67. The cladding tube 64 has a small diameter part 68.

The cladding tube 64 is a fuel cladding tube according to any one of the first to sixth embodiments.

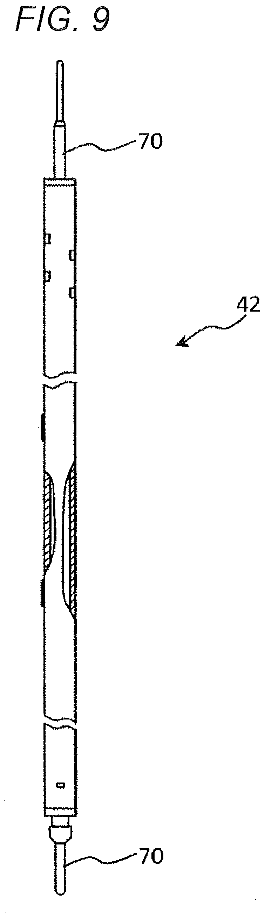

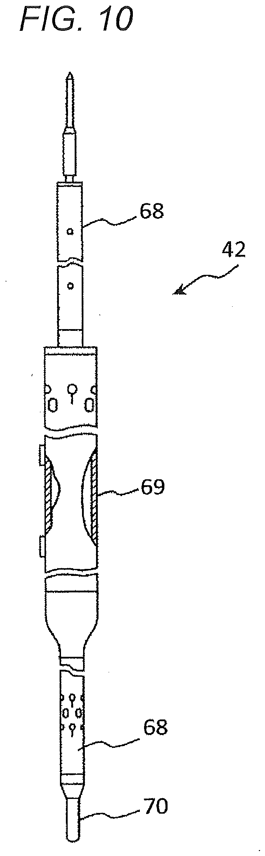

FIGS. 9 and 10 are partial sectional diagrams of the water rod produced by applying the present invention.

A water rod 42 illustrated in FIG. 9 has a hollow cylindrical shape having a uniform diameter, and both ends of the water rod 42 are sealed with end plugs 70.

The water rod 42 illustrated in FIG. 10 has a large diameter part 69 in a center part and has the small diameter parts 68 on both ends. Also, both ends are sealed with the end plugs 70.

The water rods illustrated in FIGS. 9 and 10 are formed of a tubular body having a structure same as that of the fuel cladding tube according to any one of the first to sixth embodiments.

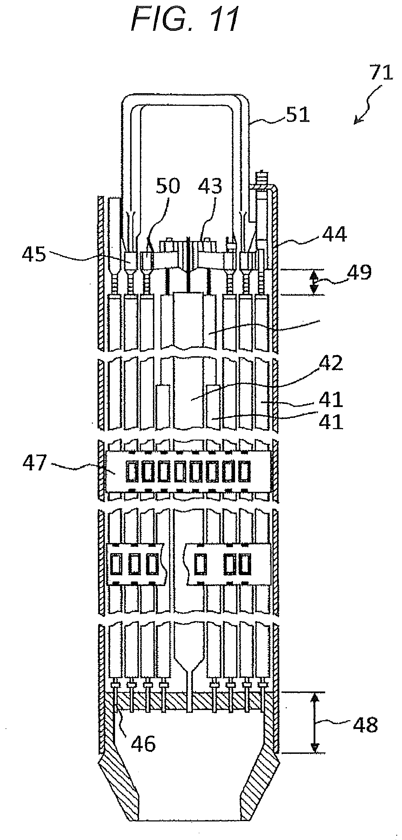

FIG. 11 is a schematic diagram of a fuel assembly including the tubular body according to the present invention.

In FIG. 11, a fuel assembly 71 has the nuclear fuel rods 41 (nuclear fuel cladding tube) and the water rod 42 formed in a bundle by a upper tie plate 45, a lower tie plate 46, a spacer 47, and the like and covered with a channel box 44.

A nuclear fuel rod through-hole 50 and a water rod fixing screw 43 are provided in the upper tie plate 45. Also, a handle 51 is attached to the upper part of the upper tie plate 45. A nuclear fuel rod margin 49 is provided between the upper tie plate 45 and the nuclear fuel rod 41. A channel box fitting margin 48 is provided below the channel box 44.

In this way, in the fuel assembly of the boiling water reactor, the nuclear fuel rod for using the fuel cladding tube configured of the tubular body according to the present invention and the fuel assembly including the water rod for using the tubular body having the same structure as that of the fuel cladding tube can contain the radioactive nuclide in the fuel rod. In case of an accident, an amount of hydrogen generated by the reaction between the SiC of the base material and the high temperature steam can be largely reduced.

### (Eighth Embodiment)

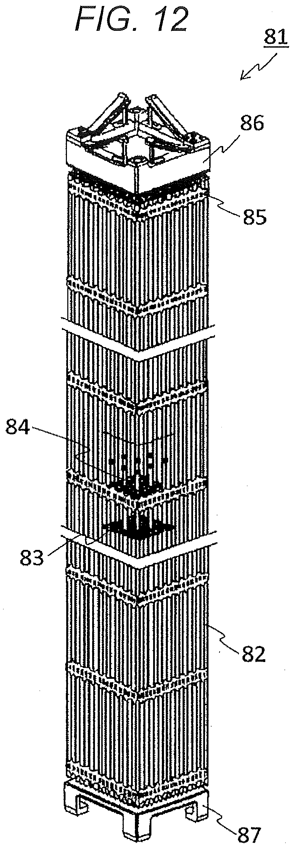

The tubular body according to the present invention can be applied to not only the fuel cladding tube and the water rod of the fuel assembly in the boiling water reactor illustrated in FIGS. 8 to 11 but also a cladding tube of a fuel rod of a pressurized water reactor illustrated in FIGS. 12 to 14.

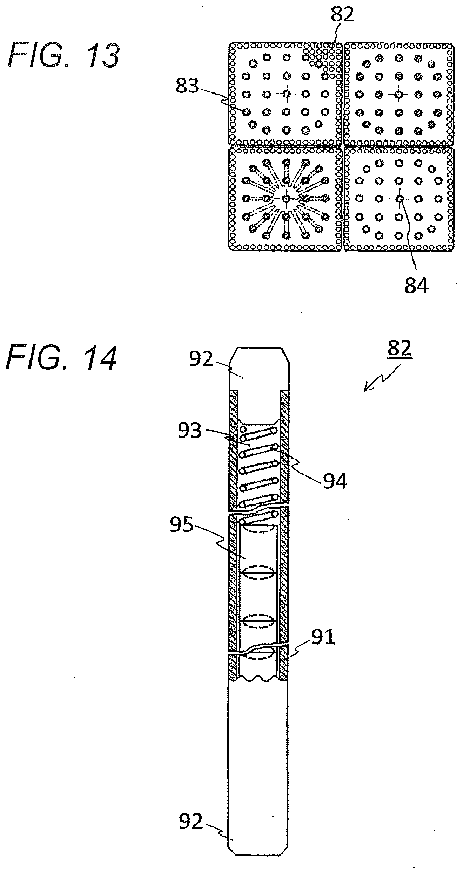

A configuration diagram of the fuel assembly according to the present embodiment is illustrated in FIG. 12, and a cross sectional diagram of the fuel assembly is illustrated in FIG. 13.

In FIGS. 12 and 13, a fuel assembly 81 mainly includes 264 fuel rods 82, 24 control rod guide thimbles 83, an incore instrumentation guide thimble 84, nine support grids 85 as support structures, a upper nozzle 86, and a lower nozzle 87. The fuel rods 82 are arrayed in a square having 17 rows and 17 columns.

Gaps are provided between both ends of the fuel rod 82 and the nozzles, and thermal expansion and growth of the fuel rod 82 can be allowed.

Major functions of the upper nozzle 86 and the lower nozzle 87 are to form a framework of the assembly 81 and to position the assembly 81 in a core part and to ensure a flow path of cooling water.

A partial sectional diagram of the structure of the fuel rod according to the present embodiment is illustrated in FIG. 14.

As illustrated in FIG. 14, the fuel rod 82 has a structure in which pellets are arranged in a single line and put in a fuel cladding tube 91 filled with helium gas and both ends of the fuel cladding tube 91 are respectively sealed with end plugs 92. Empty parts (plenum 93) to accumulate fission product gas discharged from the pellets are provided in the fuel rod 82. A volume of the plenum 93 is large enough so as not to have excessive inner pressure caused by discharged fission product gas and other gas. In a plenum part, coil springs 94 (plenum spring) to prevent movements of pellets 95 at the time of transfer or operation are provided. The fuel cladding tube 91 is configured of the fuel cladding tube according to any one of the first to sixth embodiments.

In this way, in the fuel assembly of the pressurized water reactor, radioactive nuclide in the fuel rod can be contained by using the nuclear fuel rod for using the fuel cladding tube configured of the tubular body according to the present invention. Also, in case of an accident, an amount of hydrogen generated by a reaction between SiC of a base material and high temperature steam can be largely reduced.

### (Others)

The present invention is not limited to the embodiments and can be variously changed and modified.

For example, in addition to the cladding tube of nuclear fuel and the water rod, the tubular body according to the present invention can be applied to components of plant equipment, power generation equipment, and an engine of a mobile body. Outside the tube is a medium to be a corrosive environment including high temperature steam, and the component can be used as a heat exchange pipe and a heating element to which heat is transferred via a material or medium in the pipe and a pipe wall.

### Reference Signs List

- 1: SiC tube reinforced by SiC fiber (base material)
- 2: metal inner layer
- 10: fuel cladding tube
- 31: rare earth silicate layer
- 32: middle layer
- 33: protection layer
- 41: nuclear fuel rod
- 42: water rod
- 43: water rod fixing screw
- 44: channel box
- 45: upper tie plate
- 46: lower tie plate
- 47: spacer
- 48: channel box fitting margin
- 49: nuclear fuel rod margin
- 50: nuclear fuel rod through-hole
- 51: handle
- 64: cladding tube
- 65: nuclear fuel pellet
- 66: plenum spring
- 67: end plug
- 68: small diameter part
- 69: large diameter part
- 70: end plug
- 71: fuel assembly
- 81: fuel assembly
- 82: fuel rod
- 83: control rod guide thimble
- 84: incore instrumentation guide thimble
- 85: support grid
- 86: upper nozzle
- 87: lower nozzle
- 91: fuel assembly
- 92: end plug
- 93: plenum
- 94: coil spring
- 95: pellet

## Claims

1. A tubular body comprising:
a base material formed of a SiC tube (1) reinforced by SiC fiber;
a metal layer (2) formed on a side of an inner surface of the base material; and
a rare earth silicate layer (31) formed on a side of an outer surface of the base material.

2. The tubular body according to claim 1, wherein
the metal layer is formed of any one of the following metals, Cu, Fe, Ni, Cr, Mo, Zr, and Ti or an alloy of these metals.

3. The tubular body according to claim 1, wherein
the rare earth silicate layer is formed by using any one of Y₂SiO₅, Y₂Si₂O₇, Yb₂SiO₅, Yb₂Si2O₇, and Lu₂Si₂O₇ as a main component.

4. The tubular body according to claim 1, further comprising:
a middle layer (32) formed between the base material and the rare earth silicate layer (31).

5. The tubular body according to claim 4, wherein
the middle layer (32) is a high purity SiC layer.

6. The tubular body according to claim 1, further comprising:
a high purity SiC layer (33) formed on a side of an outer surface of the rare earth silicate layer (31).

7. A fuel assembly comprising:
a nuclear fuel rod comprising the tubular body according to any one of claims 1 to 6 as a fuel cladding tube.

8. A manufacturing method for a tubular body comprising:
a process for forming a rare earth silicate layer (31) on a side of an outer surface of a base material formed of a SiC tube reinforced by SiC fiber; and
a process for forming a metal layer (2) on a side of an inner surface of the base material in which the rare earth silicate layer (31) is formed.

9. The manufacturing method for a tubular body according to claim 8, wherein
one of film forming processes is performed as the process for forming the metal layer (2), and the film forming processes include sputtering, evaporation, electroplating, electroless plating, or metal paste coating and baking.

10. The manufacturing method for a tubular body according to claim 8, wherein
as the process for forming the metal layer, a process for inserting a metal tube into the base material, extending the metal tube by increasing a pressure in the metal tube, and adhering the metal tube on a side of the inner surface of the base material is performed.

## Patentansprüche

1. Rohrförmiger Körper, der Folgendes umfasst:
ein Grundmaterial, das aus einem SiC-Rohr (1), das durch SiC-Fasern verstärkt ist, gebildet ist;
eine Metallschicht (2), die auf einer Seite einer inneren Oberfläche des Grundmaterials gebildet ist; und
eine Seltenerdsilikatschicht (31), die auf einer Seite einer äußeren Oberfläche des Grundmaterials gebildet ist.

2. Rohrförmiger Körper nach Anspruch 1, wobei
die Metallschicht aus einem der Metalle Cu, Fe, Ni, Cr, Mo, Zr und Ti oder aus einer Legierung dieser Metalle gebildet ist.

3. Rohrförmiger Körper nach Anspruch 1, wobei
die Seltenerdsilikatschicht durch Verwenden von entwederY₂SiO₅ oder Y₂Si₂O₇ oder Yb₂SiO₅ oder Yb₂Si₂O₇ oder Lu₂Si₂O₇ als eine Hauptkomponente gebildet ist.

4. Rohrförmiger Körper nach Anspruch 1, der ferner Folgendes umfasst:
eine mittlere Schicht (32), die zwischen dem Grundmaterial und der Seltenerdsilikatschicht (31) gebildet ist.

5. Rohrförmiger Körper nach Anspruch 4, wobei
die mittlere Schicht (32) eine Schicht aus hochreinem SiC ist.

6. Rohrförmiger Körper nach Anspruch 1, der ferner Folgendes umfasst:
eine Schicht (33) aus hochreinem SiC, die auf einer Seite einer äußeren Oberfläche der Seltenerdsilikatschicht (31) gebildet ist.

7. Brennelement, das Folgendes umfasst:
einen Kernbrennstab, der den rohrförmigen Körper nach einem der Ansprüche 1 bis 6 als ein Brennstoffhüllrohr umfasst.

8. Herstellungsverfahren für einen rohrförmigen Körper, das Folgendes umfasst:
einen Vorgang zum Bilden einer Seltenerdsilikatschicht (31) auf einer Seite einer äußeren Oberfläche eines Grundmaterials, das aus einem SiC-Rohr (1), das durch SiC-Fasern verstärkt ist, gebildet ist; und
einen Vorgang zum Bilden einer Metallschicht (2) auf einer Seite einer inneren Oberfläche des Grundmaterials, in dem die Seltenerdsilikatschicht (31) gebildet ist.

9. Herstellungsverfahren für einen rohrförmigen Körper nach Anspruch 8, wobei
einer von mehreren Schichtbildungsvorgängen als der Vorgang zum Bilden der Metallschicht (2) durchgeführt wird und die Schichtbildungsvorgänge Zerstäuben, Verdampfen, Elektroplattieren, stromloses Plattieren oder Metallpastenbeschichten und Metallpastenbrennen enthalten.

10. Herstellungsverfahren für einen rohrförmigen Körper nach Anspruch 8, wobei
ein Vorgang zum Einfügen eines Metallrohrs in das Grundmaterial, das Erweitern des Metallrohrs durch Erhöhen eines Drucks in dem Metallrohr und das Befestigen des Metallrohrs auf einer Seite der inneren Oberfläche des Grundmaterials als der Vorgang zum Bilden der Metallschicht durchgeführt wird.

## Revendications

1. Corps tubulaire comprenant :
un matériau de base formé d'un tube en SiC (1) renforcé par des fibres en SiC ;
une couche en métal (2) formée sur un côté d'une surface intérieure du matériau de base ; et
une couche en silicate de terre rare (31) formée sur un côté d'une surface extérieure du matériau de base.

2. Corps tubulaire selon la revendication 1, dans lequel
la couche en métal est formée de l'un quelconque des métaux suivants : Cu, Fe, Ni, Cr, Mo, Zr, Ti ou un alliage de ces métaux.

3. Corps tubulaire selon la revendication 1, dans lequel
la couche de silicate de terre rare est formée en utilisant à titre de composant principal l'une quelconque des molécules Y₂SiO₅, Y₂Si₂O₇, Yb₂SiO₅, Yb₂Si₂O₇ et Lu₂Si₂O₇.

4. Corps tubulaire selon la revendication 1, comprenant en outre :
une couche médiane (32) formée entre le matériau de base et la couche en silicate de terre rare (31).

5. Corps tubulaire selon la revendication 4, dans lequel
la couche médiane (32) est une couche de SiC de haute pureté.

6. Corps tubulaire selon la revendication 1, comprenant en outre : une couche de SiC de haute pureté (33) formée sur un côté d'une surface extérieure de la couche de silicate de terre rare (31).

7. Assemblage de combustible comprenant :
une barre de combustible nucléaire comprenant le corps tubulaire selon l'une quelconque des revendications 1 à 6 à titre de tube de revêtement de combustible.

8. Procédé de fabrication pour un corps tubulaire comprenant :
un processus pour former une couche de silicate de terre rare (31) sur un côté d'une surface extérieure d'un matériau de base formé d'un tube de SiC renforcé par des fibres de SiC ; et
un processus pour former une couche en métal (2) sur un côté d'une surface intérieure du matériau de base dans lequel la couche de silicate de terre rare (31) est formée.

9. Procédé de fabrication pour un corps tubulaire selon la revendication 8, dans lequel
à titre de processus pour former la couche en métal (2) on exécute l'un des processus de formation de film, lesdits processus de formation de film incluant pulvérisation, évaporation, électroplacage, placage non électrolytique, ou revêtement avec une pâte de métal et cuisson.

10. Procédé de fabrication pour un corps tubulaire selon la revendication 8, dans lequel, à titre de processus pour former la couche en métal, on exécute un processus pour insérer un tube en métal à l'intérieur du matériau de base, pour amener le tube en métal en extension en augmentant une pression dans le tube en métal, et en adhérant le tube en métal sur un côté de la surface intérieure du matériau de base.
